Europäisches Patentamt

European Patent Office

Office européen des brevets

(11) Publication number: **0 209 064**
**B1**

# EUROPEAN PATENT SPECIFICATION

(45) Date of publication of patent specification: **28.12.88**

(21) Application number: **86109321.9**

(22) Date of filing: **08.07.86**

(51) Int. Cl.⁴: **B 67 C 1/16,** A 23 L 3/04,
B 65 G 17/32, B 65 G 15/14

(54) **Equipment for handling various containers.**

(30) Priority: **19.07.85 JP 159962/85**
**19.07.85 JP 159961/85**
**31.10.85 JP 244790/85**

(43) Date of publication of application:
**21.01.87 Bulletin 87/04**

(45) Publication of the grant of the patent:
**28.12.88 Bulletin 88/52**

(84) Designated Contracting States:
**DE FR GB IT NL**

(56) References cited:
**DE-C- 524 003**
**GB-A-1 505 197**
**US-A-4 487 312**

(73) Proprietor: **MITSUBISHI JUKOGYO KABUSHIKI KAISHA**
**5-1, Marunouchi 2-chome Chiyoda-ku**
**Tokyo 100 (JP)**

(72) Inventor: **Araki, Kazunori c/o Nagoya Machinery Works**
**Mitsubishi Jukogyo KK 1 Aza Takamichi Iwatsuka-cho**
**Nakamura-ku Nagoya-shi Aichi-ken (JP)**
Inventor: **Hayashi, Masayuki c/o Nagoya Machinery Works**
**Mitsubishi Jukogyo KK 1 Aza Takamichi Iwatsuka-cho**
**Nakamura-ku Nagoya-shi Aichi-ken (JP)**
Inventor: **Yamaguchi, Shogo c/o Nagoya Machinery Works**
**Mitsubishi Jukogyo KK 1 Aza Takamichi Iwatsuka-cho**
**Nakamura-ku Nagoya-shi Aichi-ken (JP)**
Inventor: **Hanada, Munehiro c/o Nagoya Machinery Works**
**Mitsubishi Jukogyo KK 1 Aza Takamichi Iwatsuka-cho**
**Nakamura-ku Nagoya-shi Aichi-ken (JP)**

(74) Representative: **Henkel, Feiler, Hänzel & Partner**
**Möhlstrasse 37**
**D-8000 München 80 (DE)**

Courier Press, Leamington Spa, England.

## Description

Field of the invention

The present invention relates to a container holder which can be used as a holder or gripper for casers, uncasers, rinsers, bottle-washing machines, fillers, cappers, and other similar devices, and which can also be employed as a carrier movable between these devices.

Background of the invention

A flexible container holder that is used to carry and hold a container is disclosed in Japanese Utility Model Laid-Open No. 882/1977. Another flexible container holder that is used to carry a bottle washer is disclosed in Japanese Utility Model Laid-Open No. 88437/1978. However, a simple flexible container holder that is versatile, produces a sufficient gripping force, and has a self-centering function is not available.

In a bottling or canning plant, many kinds of containers are handled, i.e., conveyed, indexed, positioned, held and gripped. Whenever a different kind of container is to be handled, dedicated tools adapted to the size and shape of the handled containers are prepared, or the tools used for the previous handling are readjusted. As more diversified containers are used, a single plant is required to handle more kinds of containers. In order to satisfy this requirement, the components of a plant, i.e., rinser, filler, capper, caser, conveyor, etc. must be equipped with their respective numerous dedicated devices. Further, a long time is taken to set up the equipment.

In this way, in the conventional plant of this kind, dedicated handling devices are used for each individual kind of container. Therefore, the components of the plant need their respective many replaceable parts. Further, a long time is required to set up the components.

A conventional plant for handling containers consists of fillers, rinsers, cappers, case packers, uncasers, and other components which are connected together by conveyors in the order of operation. Containers to be handled are taken out of a bulk depalletizer. Then, they are individually cleaned, filled, and received in a packer. These containers are repeatedly combined together or separated according to the characteristics and the conditions of the components. At the entrance to each component, the containers are spaced a given distance from one another or arrayed, depending on the characteristics and the conditions of the component. The conveyors which interconnect the components of the plant are controlled to smoothly and efficiently run the whole production line. When one kind of container is switched to another, the following operations have been required to be performed according to the shape and the size of the container. (1) Adjustment of the width and height of each conveyor guide. (2) Adjustment of the width and height of the guides for each component. (3) Replacement and adjustment of the parts of each components which handle containers. (4) Setting of the velocity, capacity, etc.

These operations are effected when the production line is stopped. In the conventional container-handling plant described above, the components of the plant are interconnected by the conveyors, and the containers are separately handled. Therefore, the following various problems have arisen.

(1) The containers are repeatedly gathered and separated according to the characteristics and conditions of the components of the plant. Whenever the containers are handled, they collide with each other or with guides or are rubbed. As a result, the containers, such as bottles, are caused to scuff or break, or become damaged.

(2) The collisions or rubbings described in (1) above produce noise, deteriorating the work environment.

(3) It is necessary to arrange the containers at certain intervals or array them at the entrance to each component. Hence, the rate of operation of the whole production line decreases, leading to a reduction in the productivity.

(4) When one kind of container is switched to another, the widths and heights of guides for the conveyors interconnecting the components are required to be readjusted according to the shape and dimensions of the container. Further, it is necessary to replace or readjust the guides for tpe components and the parts for handling the container. Therefore, it is quite laborious to make preparations for the switching of the kind of container. Also, large space and much labor are needed to store and convey various kinds of parts. The parts used to switch one kind of container to another include container-indexing screws, star wheels, container guides, valve attachments. As the number of the kinds of containers handled increases, the number of these parts increases, thus posing problems.

(5) The containers are gathered or separated while conveyed in one or more rows. During this operation, the containers may come to a stop or fall down, resulting in a decrease in the rate of operation of the production line. Also, in order to remove the trouble, labor is necessitated. Further, in order that the containers be smoothly gathered and separated and that the components run efficiently, the line is required to be controlled in a complex manner.

(6) Since the components each having a single function are connected together by conveyors to constitute a production line, the plant occupies large space. To save the energy consumed and the space, improvements have been demanded.

(7) When one kind of container is switched to another, it is necessary to stop or halt the production line. This lowers the rate of operation of the equipment, and makes it difficult to effect a production so as to meet the diversified consumer's needs.

In DE—C—524 003 a bottle holder is described which is adapted to hold a group of four or more bottles in a unit. The holding unit described there comprises carrier plates having a purchase for inserting the bottles from above and clamping means. The clamping means comprise stationary clamping means and movable clamping means which are biased against each other by a common spring. The clamping means in this known bottle holder are capable of holding bottles with slightly different sizes of bottles, but in this case the bottles are not centered. Further, the known holder cannot be adapted to various sized or shaped containers.

In GB—A—1 505 197 a tandem bottle carrier assembly for a bottle washing machine is described which comprises a pair of roller chains in spaced parallel relation with elongated carrier means extending between said roller chains. The bottle carrier means is formed from elongated plates and end flanges with specifically shaped bottle pockets inbetween. Since the bottle pockets are not flexible, the whole bottle carrier assembly can be used only for one size of bottles. In order to handle a different size and shape of containers, the whole carrier assembly would have to be replaced. There is no provision of a container holder for a single container which can be adapted to the individual size of the container.

Summary of the invention

In view of the foregoing problems with the prior art techniques, it is an object of the present invention to provide a container holder which requires less setup operations, can be used for all the components of a production line by dispensing with the replacement or adjustment of the components by a set up operation of the first stage, and can be versatilely employed for containers of various shapes.

This object is achieved with a container holder as set forth in claim 1.

The container holder according to the present invention has a deformable holding member made from a flexible material and acting to hold a container and to place it in the center of the holder.

A retainer frame retains the holding member and an adaptor plate is used also for another kind of container or replaced with another adaptor plate depending on the force with which the container is held by the container holding member, the force being determined by the shape, weight, diameter and so on of the container.

A retainer frame retains the holding member; and an adaptor plate is used also for another kind of container or replaced with another adaptor plate, depending on the force with which the container is held by the container-holding member, the force being determined by the shape, weight, diameter, and so on of the container.

In one feature of the invention, the container-holding member is designed to be deformable along a circle. Therefore, it can readily accommodate itself to even containers of special shapes, such as square, triangle, and rectangle. The force produced by this accommodation helps centre the container, and acts to retain it. Also, the retaining force and the centering function are obtained by the frictional resistance and the restoring elastic force produced by the material. The weight of the container itself which would otherwise cause it to fall is cancelled by the force produced by the deformation of the flexible holding member.

Other objects and features of the invention will appear in the course of the description thereof which follows:

Brief description of the drawings

Fig. 1 is a perspective view of a flexible container holder according to the invention;

Fig. 2 is a cross-sectional view taken on line I—I of Fig. 1, for showing the condition in which a low container of a small diameter is retained;

Fig. 3 is a view similar to Fig. 2, but in which a high container of a large diameter is retained;

Fig. 4 is a perspective view of the flexible container holder shown in Fig. 1, and in which a rectangular bottle is held by the holder;

Fig. 5 is a cross-sectional view of a holding member;

Fig. 6 is a plan view of another holding member;

Fig. 7 is a cross-sectional view taken on line V—V of Fig. 18;

Fig. 8 is a cross-sectional view of a further holding member;

Fig. 9 is a cross-sectional view of a holding member in which a reinforcing member is inserted.

Detailed description of the invention

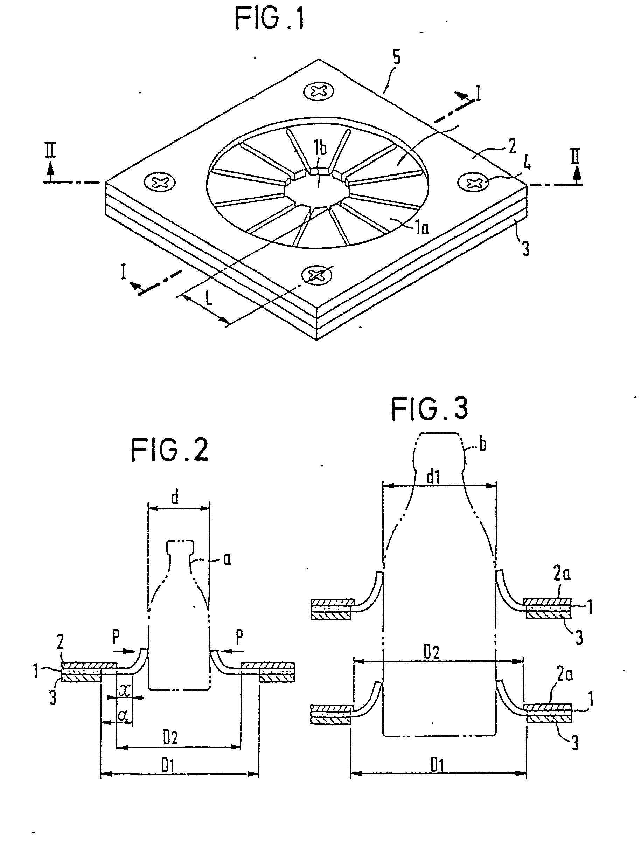

Referring to Figs. 1—3, there is shown a container holder according to the present invention. The holder, generally indicated by reference numeral 5, has a flexible holding member 1 for holding a container *a*. The holding member 1 is made from a material exhibiting a large frictional coefficient, such as synthetic resin, rubber, compound, or the like. The holding member 1 that is centrally formed with a hole 1b is divided into tongues 1a which extend radially inward. An adaptor 2 which can be replaced with another adaptor or can be used for some kinds of containers sets the force with which the container *s* is held, according to the material, size, shape, and other characteristics of the container *a*.

The adaptor 2 is made of a rectangular plate whose circular central portion has been cut off. A holding frame 3 is similar in contour to the adaptor 2. The holding member 1 is sandwiched between the frame 3 and the adaptor 2, and these components are coupled together using bolts 4 or the like to form the holder 5. The material, thickness, shape of the holding member 1, and the number of the tongues 1a can be selected at will according to the size, shape, weight, rigidity, material, and other characteristics of the container *a* retained by the holding member 1. Of course, the diameter of the hole 1b at the center is set smaller than the outside diameter d.

The relation of a container *a* to the holder 5 is now described. Referring to Fig. 1, the container *a* is inserted into the hole 1b in the holding member 1 from below the holder 5. Then, the container *a* is maintained in the condition shown in Fig. 2. At this time, the force applied to the container *a* to hold it can be arbitrarily set, depending on the outside diameter d of the container *a*, the amount of bend of the flexible holding member 1, and the length x of the straight portion. Accordingly, in the present example, the adaptor 2 that cooperates with the holding member 1 can set the force with which the container is retained.

When the container having a diameter of d is handled, the inside diameter $D_1$ of the holding frame 3 and the inside diameter $D_2$ of the adaptor 2 are determined as follows:

$$D_1 > d + (\text{thickness of the holding member} + \text{length } a \text{ of the gap}) \times 2$$
$$D_2 \geqq d + (\text{thickness of the holding member} + \text{length } x \text{ of the straight portion}) \times 2$$

where $a \geqq x$.

If necessary, the inside diameter and shape of the adaptor 2 can be determined so that the rigidity of the holding member may be circularly uniform.

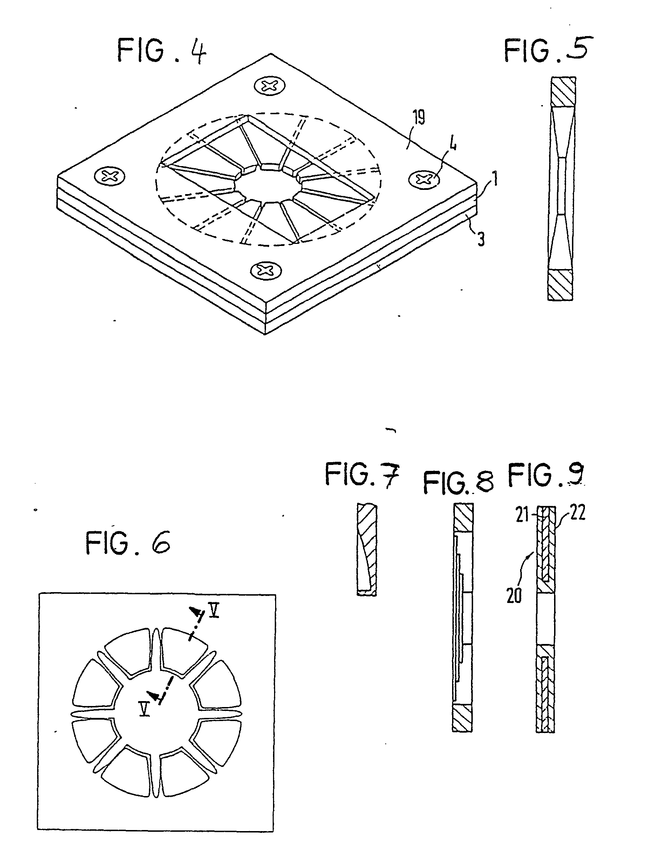

When a container b (Fig. 3) having an outside diameter $d_1$ larger than the outside diameter d of the container *a* (Fig. 2) is handled, an adaptor 2a having an inside diameter $D_2'$ is used in place of the adaptor 2. In this case, the holding member 1 is bent to a larger extent, and the straight portion is shortened. As a result, the holding member 1 applies a larger force to the container b to hold it. In order to accommodate larger and heavier containers, an additional holder 5 can be received in a carrier as shown in Fig. 3.

When the container to be held is a square bottle, an adaptor 19 as shown in Fig. 4 can be used.

In summary, the flexible holding member can be arbitrarily shaped according to the size of the handled container. It is essential that the holding member deform or bend freely in conformity to the container to hold and center the container. The force to retain the container is produced by deformation of the holding member, and increases or decreases according to the distance L between the front end 1a of each tongue 1a and the inner fringe of the adaptor 2 (Fig. 1). Also, the length of the portion of the holding member in contact with the container automatically increases or decreases, depending on the outside diameter of the container.

The shape of the holding member can be varied in the manner described below.

(1) The thickness is varied.

(2) The number of the tongues 1a is varied.

(3) The cross section of the member is tapered off (Fig. 5).

(4) The cross section is made concave to increase the force applied to the container by the bending holding member (Figs. 6 and 7).

(5) The thickness is varied in a stepwise fashion in a radial direction to change the rigidity in a stepwise fashion (Fig. 8).

(6) As shown in Fig. 9, a holding member 20 comprises a cover member 22 in which a reinforcing member 21 is inserted.

Numerous kinds of holding members can be had by variously combining these items (1)—(6).

The novel flexible container holder designed as described above yields the following advantages.

(1) Where the container holder is used in a bottling or canning line, the number of steps required is minimized. Also, the time taken to change one kind of holder to another in each step is reduced to a minimum.

(2) Since several containers are carried simultaneously by a carrier, a conveyor which would heretofore been needed simply to convey containers can be dispensed with. Hence, the equipment can be made compact. Also, the equipment occupies much less space than conventional.

(3) Since the outside diameter of the carriers is fixed, when one kind of container holder is switched to another, readjustment, a trial run of the production line, and so forth are unnecessary before the operation of the production line is started.

(4) Since the setup of the first stage can be automated, as soon as the containers are withdrawn from the carrier, the next group of different containers can be mounted in the carrier.

(5) No adjustments are required in handling containers. When the containers are bottles, they do not fall down, no does any other trouble take place. Therefore, the production line can run quite stably all day in the unattended condition.

**Claims**

1. A container holder (5) adapted to hold various sized containers (a; b) one at a time, the holder comprising:

a flexible holding member (1; 20) having a central hole (1b) therein, said holding member having means (1a) for centering, exerting a holding force on, and releasably retaining a container (a; b);

a holding frame (3) that detachably retains the holding member;

at least two different adaptor plates (2; 2a) which are respectively individually detachably secured to said holding frame one at a time for releasably retaining said holding member (1) against said holding frame (3), each adaptor plate (2; 2a) engaging said holding member (1; 20) for causing the holding member to exert a holding force on the container (a; b) which is individual to the particular adaptor plate (2; 2a), whereby one of said at least two adaptor plates is interchangeable with another one of said at least two adaptor plates, thereby effecting a different holding force of the holding member on the container.

2. The holder of claim 1, wherein said holding member (1) comprises inwardly extending flexible tongues (1a), said adaptor plates (2; 2a) engaging said flexible tongues at respective points, intermediate the length thereof, whereby the effective lengths of said flexible tongues (1a) are determined by said adaptor plates (2; 2a) thereby determining the holding force of said flexible tongues on the container (a; b).

3. The holder of claim 1 or 2, wherein the cross-section of the holding member is tapered off in a radial direction towards the central hole (Fig. 13).

4. The holder of claim 1 or 2, wherein the cross-section of the holding member is made concave to increase the force applied to the container by the bending holding member (Figs. 18 and 19).

5. The holder of claim 1 or 2, wherein the thickness of the holder member is varied in a stepwise fashion in a radial direction (Fig. 20).

6. The holder of claims 1 or 2, wherein the holding member (20) comprises a cover member (22) in which a reinforcing member (21) is inserted (Fig. 21).

## Patentansprüche

1. Behälter-Haltevorrichtung zum Halten von Behältern (a; b) verschiedener Größen, welche akkweist:

—ein biegsames Halteelement (1; 20) mit einem mittig in ihm vorgesehenen Loch (1b), welches Einrichtungen (1a) zur Zentrierung, zur Ausübung einer Haltekraft auf einen Behälter (a; b) und zu dessen lösbaren Halterung aufweist;

—einen Halterahmen (3), welcher das Halteelement abnehmbar hält;

—mindestens zwei unterschiedliche Adapterplatten (2; 2a), von denen jeweils nur eine einzeln lösbar an dem Halterahmen befestigt ist, um das Halteelement (1) abnehmbar an dem Halterahmen (3) zu haltern, wobei jede Adapterplatte (2; 2a) so mit dem Halteelement (1; 20) im Eingriff ist, daß dieses eine Haltekraft auf den Behälter (a; b) ausübt, die individuell der betreffenden Adapterplatte (2; 2a) zuzuordnen ist, wobei die eine von den mindestens zwei Adapterplatten mit einer anderen von ihnen austauschbar ist, wodurch eine unterschiedliche Haltekraft des Halteelementes auf den Behälter ausgeübt wird.

2. Haltevorrichtung nach Anspruch 1, dadurch gekennzeichnet, daß das Halteelement (1) nach innen sich erstreckende biegsame Zungen (1a) aufweist, wobei die Adapterplatten (2; 2a) mit den biegsamen Zungen an entsprechenden Punktten im Mittenbereich von deren Länge im Eingriff sind, wodruch die jeweilige effektive Länge dieser flexiblen Zungen (1a) durch die betreffende Adapterplatte (2; 2a) bestimmt wird, wodurch wiederum die Haltekraft der flexiblen Zungen auf den Behälter (a; b) bestimmt wird.

3. Haltevorrichtung nach Anspruch 1 oder 2, dadurch gekennzeichnet, daß der Querschnitt des Halteelementes in Radialrichtung zum mittigen Loch hin verjüngt ist (Fig. 13).

4. Haltevorrichtung nach Anspruch 1 oder 2, dadurch gekennzeichnet, daß der Querschnitt des Halteelementes konkav ausgebildet ist, wodurch die auf den Behälter durch das biegsame Halteelement ausgeübte Kraft verstärkt wird (Fig. 18 und 19).

5. Haltevorrichtung nach Anspruch 1 oder 2, dadurch gekennzeichnet, daß die Dicke des Halteelementes in Radialrichtung sich stufenförmig verändert (Fig. 20).

6. Haltevorrichtung nach Anspruch 1 oder 2, dadurch gekennzeichnet, daß das Halteelement (20) ein Hüllelement (22) aufweist, in welchem Verstärkungselemente (21) eingesetzt sind (Fig. 21).

## Revendications

1. Support de récipient (5) adapté pour tenir des récipients de différentes dimensions (a; b) un à un, le support comprenant: un élément de retenue flexible (1; 20) présentant un trou central (1b), ledit élément de retenue possédant des moyens (1a) pour centrer un récipient (a; b), exercer une force de retenue sur ce récipient et retenir élastiquement ce récipient;

un cadre de retenue (3) qui retient l'élément de retenue par une liaison démontable;

au moins deux plaques adaptatrices différentes (2; 2a) qui sont respectivement fixées individuellement audit cadre de retenue par des liaisons démontables, une à la fois pour retenir ledit élément de retenue (1) contre le cadre de retenue (3) par une liaison démontable, chaque plaque adaptatrice (2; 2a) attaquant ledit élément de retenue (1; 20) pour amener l'élément de retenue à exercer une force de retenue sur le récipient (a; b), force qui est adaptée individuellement à la plaque adaptatrice particulière (2; 2a), de sorte qu'une de ces deux plaques adaptatrices peut être interchangée avec une autre des deux plaques adaptatrices, pour faire en sorte que l'élément de retenue exerce une force de retenue différente sur le récipient.

2. Support selon la revendication 1, dans lequel ledit élément de retenue (1) comprend des languettes flexibles (1a) s'étendant vers l'intérieur, lesdites plaques adaptatrices (2; 2a) attaquant lesdites languettes flexibles en des points respectifs, qui sont situés en des points intermédiaires de leur longueur, de sorte que les longueurs effectives desdites languettes flexibles (1a) sont déterminées par lesdites plaques adaptatrices (2; 2a), ce qui détermine la force de retenue desdites languettes flexibles sur le récipient (a; b).

3. Support selon la revendication 1 ou 2, dans lequel la section de l'élément de retenue décroît dans la direction radiale vers le trou central (figure 13).

4. Support selon la revendication 1 ou 2, dans

EP 0 209 064 B1

lequel la section de l'élément de retenue est concave pour accroître la force appliquée au récipient par l'élément de retenue lorsqu'il fléchit (figures 18 et 19).

5. Support selon la revendication 1 ou 2, dans lequel l'épaisseur de l'élément de retenue varie de façon étagée dans la direction radiale (figure 20).

6. Support selon la revendication 1 ou 2, dans lequel l'élément de retenue (20) comprend un élément de revêtement (22) dans lequel est inséré un élément de renforcement (21) (figure 21).

EP 0 209 064 B1

## FIG.1

## FIG.2

## FIG.3

FIG . 4

FIG . 5

19

4

1

3

FIG . 7   FIG . 8   FIG . 9

21   22

20

FIG . 6

V

V

2